# FASCICULE DE BREVET EUROPEEN

(11) **EP 1 618 334 B1**
(45) Date de publication et mention de la délivrance du brevet: **15.01.2014**
(21) Numéro de dépôt: 04742836.2
(22) Date de dépôt: 07.04.2004
(51) Int. Cl.: F23C 6/04, C03B 5/235

(54) **PROCEDE DE COMBUSTION ETAGEE D UN COMBUSTIBLE LIQUIDE ET D'UN OXYDANT DANS UN FOUR**
VERFAHREN ZUR STUFENVERBRENNUNG EINES FLÜSSIGEN BRENNSTOFFS UND EINES OXYDATIONSMITTELS IN EINEM OFEN
STAGED COMBUSTION METHOD FOR A LIQUID FUEL AND AN OXIDANT IN A FURNACE

(30) Priorité: 18.04.2003 FR 0304867
(43) Date de publication de la demande: 25.01.2006
(73) Titulaire: L'AIR LIQUIDE, Société Anonyme pour l'Etude et l'Exploitation des Procédés Georges Claude, 75007 Paris (FR)
(72) Inventeur: DUPERRAY, Pascal, F-78180 MONTIGNY LE BRETONNEUX (FR); GRAND, Benoît, F-78000 VERSAILLES (FR); LEROUX, Bertrand, F-92130 Issy les Moulineaux (FR); RECOURT, Patrick, F-91460 MARCOUSSIS (FR); TSIAVA, Rémi, F-91250 SAINT GERMAIN LES CORBEIL (FR)
(74) Mandataire: Ducreux, Marie
(86) Numéro de dépôt international: PCT/FR2004/050149
(87) Numéro de publication internationale: WO 2004/094902

(56) Documents cités:
- EP-A- 0 639 742
- EP-A- 0 687 853
- WO-A-02/081967
- US-A- 4 842 509

## Description

La présente invention concerne un procédé de combustion étagée d'un combustible liquide et d'un oxydant dans un four.

Les performances d'un procédé de combustion dans un four industriel doivent répondre à deux critères :
- limiter les rejets de polluants atmosphériques (NOx, poussières, ...) qui doivent être en quantité inférieure à la limité fixée par la législation,
- contrôler la température des parois du four et de la charge à chauffer de manière à répondre, à la fois aux contraintes relatives à la qualité du produit soumis à la combustion et à la consommation énergétique.

L'évolution de la législation sur les émissions de polluants atmosphériques, notamment les oxydes d'azote, ont conduit à une évolution importante de technologies de combustion. Un premier procédé de combustion limitant l'émission des NOx est la combustion oscillante (EP-A1-0 524 880) qui consiste à faire osciller le débit de combustible et/ou de comburant. La stoechiométrie s'écartant de 1, la température locale diminue, ce qui conduit à une réduction des NOx. Une autre solution est la combustion étagée qui prévoit la dilution des réactifs dans les zones principales de la réaction : ceci permet de s'éloigner des proportions stoechiométriques et d'éviter les pics de température propices à la formation des NOx (WO02/081967)

Ces mises en oeuvre de l'art antérieur sont des solutions essentiellement adaptées à la combustion d'un combustible gazeux. Lors d'une combustion diphasique à l'aide d'un combustible liquide et d'un oxydant gazeux, le procédé de combustion comprend les étapes supplémentaires d'atomisation du liquide, puis de vaporisation des gouttes de liquide pour que le combustible devenu gazeux puisse réagir avec l'oxydant gazeux. Divers paramètres supplémentaires vont donc influencer la combustion : le type d'atomiseur utilisé, par exemple, mais également pour un injecteur à atomisation assistée la vitesse de l'écoulement du gaz d'atomisation qui va jouer sur la taille des gouttes et la qualité de l'atomisation. Outre les paramètres directement liés à l'étape d'atomisation, le procédé de combustion va être influencé par le mélange des réactifs car celui-ci influe sur le mode de combustion ainsi que sur la formation d'émissions polluantes. Ainsi, le rapport de la longueur de vaporisation et de la longueur de mélange est un paramètre important. La longueur de vaporisation est la distance nécessaire à l'évaporation des gouttes de combustible liquide, elle est liée à la taille des gouttes, à leur vitesse et à la nature du liquide. La longueur du mélange est la distance nécessaire pour que les réactifs, qui sont injectés séparément, se retrouvent mélangés dans un rapport stoechiométrique. Si la longueur de vaporisation est trop grande par rapport à la longueur de mélange, la combustion est incomplète ; on parle de régime de combustion incomplète : "brush" en anglais. Au contraire, si la longueur de vaporisation est trop faible par rapport à la longueur de mélange, le mélange trop rapide conduit à des niveaux élevés d'oxyde d'azote ; on parle de régime de "vaporisation". Il est donc préférable de se situer à la transition entre ces deux régimes (rapport de la longueur de vaporisation sur la longueur de mélange proche de 1).

EP-B1-0 687 853 propose un procédé de combustion étagée d'un combustible liquide. Ce procédé consiste à injecter le combustible liquide sous forme d'une pulvérisation divergente ayant un angle à la périphérie extérieure inférieur à 15° et d'injecter l'oxydant sous forme de deux écoulements : un écoulement primaire et un écoulement secondaire, l'écoulement primaire devant présenter une faible vitesse, inférieure à 61 m/s. Ce procédé présente plusieurs inconvénients. Tout d'abord, la mise en oeuvre d'un angle aussi faible impose la mise en oeuvre d'une vitesse de gaz d'atomisation élevée, ce qui crée des pertes de charge importantes et peut nuire à la stabilité de flamme. Ensuite, du fait de la faible valeur de l'angle de pulvérisation, le mode de combustion est de type "vaporisation" et ne permet pas d'optimiser la diminution des NOx. Enfin, cette faible valeur de l'angle de pulvérisation ne permet pas de faire varier de façon continue les paramètres géométriques de la flamme. Or, il peut être utile selon la charge de modifier la géométrie de la flamme de manière à éviter notamment la formation locale d'un point chaud.

Le but de la présente invention est donc de proposer un procédé de combustion étagée mettant en oeuvre un combustible liquide permettant de limiter la formation des NOx tout en conservant une flamme stable.

Un autre but est de proposer un procédé de combustion étagée mettant en oeuvre un combustible liquide permettant de limiter la formation des NOx et d'avoir une grande flexibilité du brûleur.

Dans ce but, l'invention concerne un procédé de combustion d'un combustible liquide et d'un oxydant selon l'objet de la revendication 1.

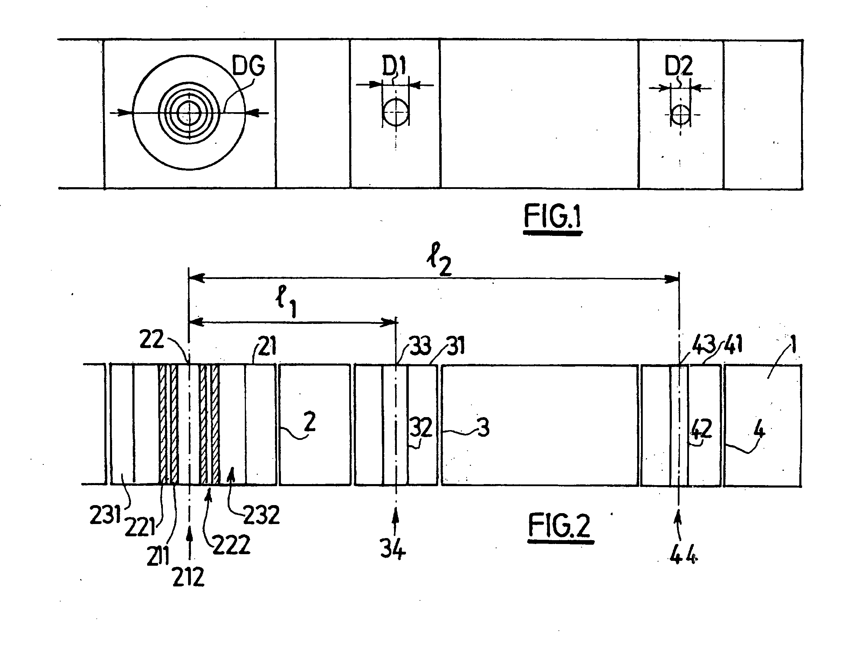

D'autres caractéristiques et avantages de l'invention apparaîtront à la lecture de la description qui va suivre. Des formes et des modes de réalisation de l'invention sont donnés à titre d'exemples non limitatifs, illustrés par les figures 1 et 2 qui sont des vues schématiques d'un dispositif permettant la mise en oeuvre du procédé selon l'invention.

Une des caractéristiques essentielles du procédé selon l'invention est qu'il concerne un procédé de combustion d'un combustible liquide, qui est éjecté de la lance du brûleur sous forme atomisée. Ce jet du combustible liquide sous forme atomisée peut être obtenu par toute méthode d'atomisation telle que l'éjection sous pression du combustible liquide ou le mélange du combustible avec un gaz d'atomisation avant ou lors de son éjection. Ainsi, selon un mode préféré, le jet du combustible liquide sous forme atomisée peut être obtenu par injection coaxiale d'un jet de gaz d'atomisation autour d'un jet du combustible liquide. Le gaz d'atomisation peut être choisi parmi un gaz oxydant tel que l'air ou l'oxygène ou un gaz inerte tel que l'azote ou la vapeur d'eau. Selon ce mode préféré, le débit massique du jet de gaz d'atomisation est avantageusement compris entre 5 et 40 % de la valeur du débit massique du jet de combustible liquide, encore plus préférentiellement entre 15 et 30 %.

Selon une autre caractéristique essentielle de l'invention, le jet d'oxydant primaire est divisé en au moins deux jets dont l'un au moins est un jet d'oxydant primaire de gainage. Ce jet d'oxydant primaire de gainage est injecté de manière coaxiale autour du jet du combustible liquide sous forme atomisée. Le second jet d'oxydant primaire est injecté à une distance I₁ du jet du combustible liquide atomisé. Selon l'invention, cette distance I₁ entre le second jet d'oxydant primaire et le jet de combustible liquide est comprise entre 1,5 D_{G} et I₂/2, D_{G} représentant le diamètre du cercle de même surface que la surface de l'injecteur à travers lequel le premier jet d'oxydant primaire de gainage est injecté. A titre d'exemple, la valeur de D_{G} peut être comprise entre 30 et 60 mm.

La distance I₂ entre le jet d'oxydant secondaire et le jet de combustible peut être comprise en 8 D₂ et 40 D₂, D₂ représentant le diamètre du cercle de même surface que la surface de l'injecteur à travers lequel l'oxydant secondaire est injecté. Ce diamètre D₂ peut être compris entre 10 et 60 mm.

Le diamètre du cercle de même surface que la surface de l'injecteur à travers lequel le second jet d'oxydant primaire est injecté, D₁, peut être compris entre 15 et 70 mm. De préférence, le diamètre D₁ est supérieur au diamètre D₂.

Selon une variante de l'invention, le jet d'oxydant secondaire et le jet d'oxydant primaire situé à une distance I₁ du jet de combustible liquide sont constitués d'une pluralité de jets. Ainsi, le jet d'oxydant primaire situé à une distance I₁ du jet de combustible liquide peut être constitué de deux jets identiques situés à la même distance I₁ du jet de combustible liquide, les trois jets étant sensiblement situés dans le même plan, et le jet d'oxydant secondaire peut être constitué de deux jets identiques situés à la même distance I₂ du jet de combustible liquide, les trois jets étant sensiblement situés dans le même plan ; de préférence les cinq jets sont sensiblement situés dans le même plan.

La quantité d'oxydant secondaire représente généralement au plus 90 % de la quantité totale d'oxydant injecté, de préférence 10 à 90 %. Plus préférentiellement, la quantité d'oxydant secondaire est comprise entre 50 et 90 %, voire entre 60 et 80 %, de la quantité totale d'oxydant injectée, l'oxydant primaire (qui correspond à la fois l'oxydant primaire de gainage et le deuxième jet d'oxydant primaire) représentant une quantité comprise entre 10 et 50 %, voire entre 20 et 40 %, de la quantité totale d'oxydant.

De préférence, le débit massique du premier jet d'oxydant primaire de gainage est compris entre 10 et 20 % de la valeur du débit massique du jet d'oxydant total (oxydant primaire + oxydant secondaire).

L'oxydant primaire et l'oxydant secondaire peuvent présenter la même composition ; cela présente notamment l'avantage de n'avoir qu'une seule source d'oxydant à diviser entre les différents points d'injection d'oxydant primaire ou secondaire. Mais, de préférence, la concentration en oxygène dans l'oxydant primaire est plus élevée que la concentration en oxygène dans l'oxydant secondaire.

La composition de l'oxydant peut être variable et selon les conditions ou les résultats souhaités. D'une manière générale, l'oxydant peut être constitué d'un mélange de gaz comportant :
- de 5 à 100 % en volume d'oxygène, de préférence 30 à 100 %,
- de 0 à 95 % en volume de CO₂, de préférence 0 à 90 %,
- de 0 à 80 % en volume de N₂, de préférence 0 à 70 %,
- de 0 à 90 % en volume d'Ar.

Le mélange pourra également contenir d'autres constituants et notamment de la vapeur d'eau et/ou des NOx et/ou SOx. Généralement, l'air apporte 0 à 90 % en volume du débit d'oxygène total de l'oxydant, le complément étant apporté par de l'air enrichi en oxygène ou de l'oxygène substantiellement pur. De préférence, l'air représente 15 à 40 % en volume du débit d'O₂ total dans l'oxydant.

Selon une mise en oeuvre avantageuse, les vitesses d'injection du second jet d'oxydant primaire et du jet d'oxydant secondaire sont inférieures ou égales à 200 m/s, et lorsque le procédé selon l'invention est mis en oeuvre pour la combustion d'une charge de verre, les vitesses d'injection du second jet d'oxydant primaire et du jet d'oxydant secondaire sont préférentiellement inférieures ou égales à 100 m/s. En outre, il est préférable que la vitesse du jet d'oxydant secondaire soit supérieure à la vitesse du second jet d'oxydant primaire.

La figure 1 est une vue schématique partielle de dessus d'un exemple d'un ensemble d'un ensemble de combustion pour la mise en oeuvre du procédé selon l'invention et la figure 2 est la vue schématique en coupe correspondante. L'ensemble de combustion est placé dans un bloc réfractaire 1 présentant trois alésages cylindriques 2, 3 et 4, dans lesquelles ont été respectivement glissés trois blocs 21, 31 et 41.

Le bloc 21 comporte :
- une canalisation (ou injecteur) 211 qui débouche en 22. Cette canalisation 211 reçoit le combustible liquide 212.
- une canalisation (ou injecteur) 221 qui débouche en 22 et disposée de manière concentrique autour de la canalisation 211 dans laquelle le combustible liquide 212 est injecté. Cette canalisation 221 reçoit le gaz d'atomisation 222.
- une canalisation (ou injecteur) 231 qui débouche en 22 et disposée de manière concentrique autour de la canalisation 221 dans laquelle le gaz d'atomisation 222 est injecté. Cette canalisation a un diamètre D_{G} en 22. Elle reçoit l'oxydant primaire de gainage 232.

Le bloc 31, de préférence cylindrique, est percé d'une canalisation (ou injecteur) 32 dont l'orifice débouche en 33 du bloc. Cette canalisation (ou injecteur) 32 a un diamètre en 33 égal à D₁ et le centre de cette canalisation 32 est située à une distance I₁ du centre de la canalisation 211. La canalisation 32 reçoit l'oxydant primaire (34) différent de l'oxydant primaire de gainage.

Le bloc 41, de préférence cylindrique, est percé d'une canalisation (ou injecteur) 42 dont l'orifice débouche en 43 du bloc. Cette canalisation (ou injecteur) 42 a un diamètre en 43 égal à D₂ et le centre de cette canalisation 42 est située à une distance I₂ du centre de la canalisation 211. La canalisation 42 reçoit l'oxydant dit secondaire (44).

Pour le fonctionnement de ce système, il est possible d'utiliser la même source d'oxydant pour l'oxydant primaire (34 et 232) et l'oxydant secondaire (44), les diamètres des canalisations correspondantes (32, 231 et 42) étant choisis de manière à fixer des vitesses d'injection différentes ou identiques selon le type de combustion désirée.

Selon un mode avantageux, les extrémités des canalisations permettant l'injection d'oxydants sont en retrait dans le port réfractaire.

Par la mise en oeuvre du procédé selon l'invention, il est possible de réaliser la combustion d'un combustible liquide tout en limitant la formation des NOx. En outre, le procédé selon l'invention présente l'avantage de permettre un contrôle de la stabilité de la flamme et de la flexibilité thermique du procédé. En effet, selon la nature de la charge, la géométrie du four, il peut être préférable de mettre en oeuvre une flamme de petit ou de grand volume, ou de contrôler le transfert thermique en certains points du four ou d'homogénéiser le température de la voûte. Selon l'invention, cette flexibilité est obtenue par le contrôle de la répartition du débit d'oxydant total entre le jet d'oxygène secondaire et les jets d'oxydant primaire, et de préférence entre le jet d'oxygène secondaire et le second jet d'oxydant primaire qui est différent du jet d'oxydant primaire de gainage. Ce contrôle de la répartition du débit d'oxydant total est également appelé étagement.

### EXEMPLE

On a utilisé un brûleur présentant la configuration des figures 1 et 2 et comprenant en outre :
- un deuxième injecteur d'oxydant primaire situé à une distance I₁ du jet de combustible liquide 211 et symétrique du premier injecteur d'oxydant primaire 31 par rapport à l'injecteur de combustible 211, et
- un deuxième injecteur d'oxydant secondaire situé à une distance I₂ de l'injecteur de combustible liquide 211 et symétrique du premier injecteur d'oxydant secondaire 42 par rapport à l'injecteur de combustible 211.

Les cinq jets étaient tous dans le même plan. La puissance du brûleur était de 2 MW. Le brûleur a été installé sur un four de 6 m de long et de section transversale de 1,5 m sur 2 m. Le rapport I₂/D₂ était de 14,6, le rapport I₁/D_{G} était de 2 et le rapport I₁/I₂ était de 0,26.

Le combustible injecté était un fuel lourd présentant la composition suivante :
C 87,9 % en masse
H 10,02 % en masse
O 0,67 % en masse
N 0,39 % en masse
S 0,98 % en masse

Sa viscosité dynamique était de 39 mm²/s à 100°C, sa masse volumique était de 980 kg/m³ et son pouvoir calorifique inférieure à 9631 kcal/kg.

Le gaz d'atomisation était soit de l'oxygène, soit de l'air.

Par la mise en oeuvre du procédé selon l'invention, il a été possible de modifier la géométrie de la flamme en contrôlant la répartition du débit d'oxydant total entre les différents injecteurs primaires et secondaires. Ainsi, par l'injection de 75 % du débit d'oxydant total dans les injecteurs d'oxydant secondaire, on obtient une flamme de large volume. De même, par l'injection en modifiant ce pourcentage, il est possible de diminuer le volume de la flamme. Ainsi, selon la nature de la charge et le lieu où le brûleur est installé dans le four, il est possible avec le procédé de l'invention d'ajuster le volume de la flamme.

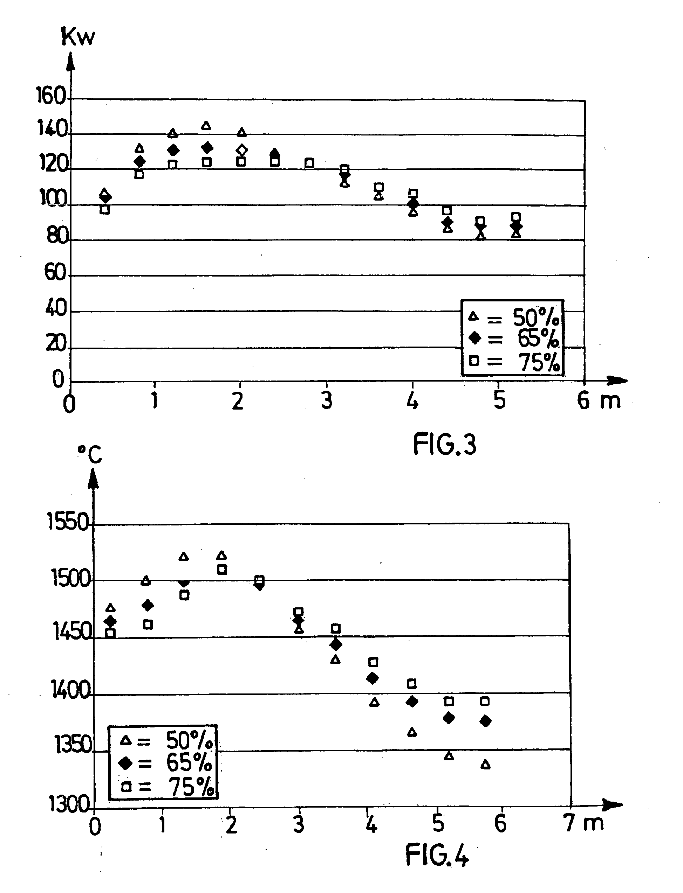

La figure 3 représente la puissance transférée par la flamme à la sole du four en fonction de la distance au brûleur pour différentes proportions du débit d'oxydant total injecté dans les injecteurs secondaires (50, 65 et 75 % du débit d'oxydant total injecté dans les injecteurs secondaires). On observe qu'un étagement important (injection d'une plus grande quantité d'oxydant dans les injecteurs secondaires que dans les injecteurs primaires) permet de réduire la puissance à proximité du brûleur et d'augmenter le transfert loin des injecteurs. Par le procédé selon l'invention, il est ainsi possible de modifier le profil de transfert thermique. C'est un avantage du procédé de l'invention : en effet, ce procédé est adaptable à différents types de géométrie de four. Dans le cas des exemples de la figure 3, le gaz d'atomisation est de l'oxygène.

La figure 4 représente la température de la voûte du four le long de l'axe longitudinal du four en fonction de la distance au brûleur pour différentes proportions du débit d'oxydant total injecté dans les injecteurs secondaires (50, 65 et 75 % du débit d'oxydant total injecté dans les injecteurs secondaires). On observe qu'un étagement important peut permettre d'assurer l'homogénéité de la température de la voûte. Dans le cas des exemples de la figure 4, le gaz d'atomisation est de l'air.

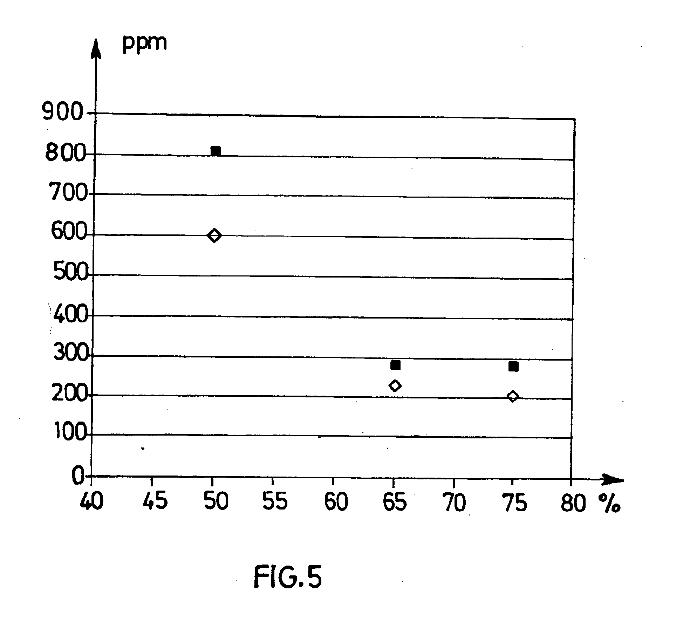

La figure 5 représente la quantité de NOx émise en fonction de la proportion d'oxydant total injecté dans les injecteurs secondaires (étagement) et pour deux types de gaz d'atomisation : l'oxygène et l'air. La courbe relative à l'utilisation de l'oxygène comme gaz d'atomisation est repérée par des losanges blancs et la courbe relative à l'utilisation de l'air comme gaz d'atomisation est repérée par des carrés noirs. On observe qu'avec un étagement important, l'émission de NOx est de 200 ppm si le gaz d'atomisation est de l'oxygène et de 300 ppm si le gaz d'atomisation est de l'air.

## Revendications

1. Procédé de combustion d'un combustible liquide et d'un oxydant dans lequel on injecte au moins un jet du combustible liquide sous forme atomisée et au moins un jet d'oxydant, le jet d'oxydant comportant un jet d'oxydant primaire et un jet d'oxydant secondaire, le jet d'oxydant primaire étant injecté à proximité du jet de combustible liquide de manière à engendrer une première combustion incomplète, les gaz issus de cette première combustion comportant encore au moins une partie du combustible, tandis que le jet d'oxydant secondaire est injecté à une distance I₂ du jet de combustible liquide qui est supérieure à la distance entre le jet de combustible liquide et le jet d'oxydant primaire le plus proche du jet de combustible liquide, de manière à entrer en combustion avec la partie du combustible présent dans les gaz issus de la première combustion, le jet d'oxydant primaire comprenant au moins un premier jet d'oxydant primaire de gainage qui est injecté de manière coaxiale autour du jet de combustible liquide sous forme atomisée
**caractérisé en ce que** le jet d'oxydant primaire est divisé en au moins deux jets primaires,
au moins un second jet d'oxydant primaire étant injecté à une distance I₁ du jet du combustible liquide, la distance I₁ entre le second jet d'oxydant primaire et le jet de combustible liquide étant comprise entre 1,5 D_{G} et I₂/2, D_{G} représentant le diamètre du cercle de même surface que la surface de l'injecteur (221) à travers lequel le premier jet d'oxydant primaire de gainage est injecté.

2. Procédé selon la revendication précédente, **caractérisé en ce que** le jet du combustible liquide sous forme atomisée est obtenu par injection coaxiale d'un jet de gaz d'atomisation autour d'un jet du combustible liquide.

3. Procédé selon la revendication précédente, **caractérisé en ce que** le gaz d'atomisation est choisi parmi un gaz oxydant tel que l'air ou l'oxygène ou un gaz inerte tel que l'azote ou la vapeur d'eau.

4. Procédé selon la revendication 2 ou 3, **caractérisé en ce que** le débit massique du jet de gaz d'atomisation est compris entre 5 et 40 % de la valeur du débit massique du jet de combustible liquide.

5. Procédé selon l'une des revendications précédentes, **caractérisé en ce que** la distance I₂ entre le jet d'oxydant secondaire et le jet de combustible est comprise en 8 D₂ et 40 D₂, D₂ représentant le diamètre du cercle de même surface que la surface de l'injecteur (42) à travers lequel l'oxydant secondaire est injecté.

6. Procédé selon l'une des revendications précédentes, **caractérisé en ce que** le diamètre du cercle de même surface que la surface de l'injecteur (42) à travers lequel l'oxydant secondaire est injecté, D₂, est compris entre 10 et 60 mm.

7. Procédé selon l'une des revendications précédentes, **caractérisé en ce que** le diamètre du cercle de même surface que la surface de l'injecteur (32) à travers lequel le second jet d'oxydant primaire est injecté, D₁, est compris entre 15 et 70 mm.

8. Procédé selon l'une des revendications précédentes, **caractérisé en ce que** la quantité totale d'oxydant secondaire est comprise entre 50 et 90 % de la quantité totale d'oxydant injectée.

9. Procédé selon l'une des revendications précédentes, **caractérisé en ce que** les vitesses d'injection du second jet d'oxydant primaire et du jet d'oxydant secondaire sont inférieures ou égales à 200 m/s.

10. Procédé selon l'une des revendications précédentes, **caractérisé en ce qu'**il est mis en oeuvre pour la combustion d'une charge de verre et **en ce que** les vitesses d'injection du second jet d'oxydant primaire et du jet d'oxydant secondaire sont inférieures ou égales à 100 m/s.

11. Procédé selon l'une des revendications précédentes, **caractérisé en ce que** le débit massique du premier jet d'oxydant primaire de gainage est compris entre 10 et 20 % de la valeur du débit massique du jet d'oxydant total, le jet d'oxydant total correspondant à la somme des jets d'oxydant primaires et secondaires.

## Patentansprüche

1. Verfahren zur Verbrennung eines flüssigen Brennstoffs und eines Oxidationsmittels, wobei mindestens ein Strahl des flüssigen Brennstoffs in zerstäubter Form und mindestens ein Strahl Oxidationsmittel eingespritzt werden, wobei der Strahl Oxidationsmittel einen Oxidationsmittel-Primärstrahl und einen Oxidationsmittel-Sekundärstrahl aufweist, wobei der Oxidationsmittel-Primärstrahl in der Nähe des Strahls flüssigen Brennstoffs so eingespritzt wird, dass eine erste unvollständige Verbrennung erzeugt wird, wobei die bei dieser ersten Verbrennung entstandenen Gase noch mindestens einen Teil des Brennstoffs aufweisen, während der Oxidationsmittel-Sekundärstrahl in einem Abstand I₂ zum Strahl flüssigen Brennstoffs eingespritzt wird, der größer ist als der Abstand zwischen dem Strahl flüssigen Brennstoffs und dem Oxidationsmittel-Primärstrahl, der dem Strahl flüssigen Brennstoffs am nächsten liegt, um mit dem Teil des Brennstoffs in den bei der ersten Verbrennung entstandenen Gasen zu verbrennen, wobei der Oxidationsmittel-Primärstrahl mindestens einen ersten Oxidationsmittel-Primärhüllstrahl umfasst, der koaxial um den Strahl flüssigen Brennstoffs in zerstäubter Form eingespritzt wird, **dadurch gekennzeichnet, dass** der Oxidationsmittel-Primärstrahl in mindestens zwei Primärstrahlen aufgeteilt wird,
wobei mindestens ein zweiter Oxidationsmittel-Primärstrahl in einem Abstand I₁ zu dem Strahl des flüssigen Brennstoffs eingespritzt wird, wobei der Abstand I₁ zwischen dem zweiten Oxidationsmittel-Primärstrahl und dem Strahl flüssigen Brennstoffs zwischen 1,5 D_{G} und I₂/2 beträgt, wobei D_{G} den Durchmesser des Kreises mit derselben Fläche wie die Fläche der Einspritzvorrichtung (221) darstellt, durch die der erste Oxidationsmittel-Primärhüllstrahl eingespritzt wird.

2. Verfahren nach dem vorhergehenden Anspruch, **dadurch gekennzeichnet, dass** der Strahl des flüssigen Brennstoffs in zerstäubter Form durch koaxiales Einspritzen eines Zerstäubungsgasstrahls um einen Strahl des flüssigen Brennstoffs herum erhalten wird.

3. Verfahren nach dem vorhergehenden Anspruch, **dadurch gekennzeichnet, dass** das Zerstäubungsgas aus einem oxidierenden Gas wie Luft oder Sauerstoff oder einem Inertgas wie Stickstoff oder Wasserdampf ausgewählt wird.

4. Verfahren nach Anspruch 2 oder 3, **dadurch gekennzeichnet, dass** der Massenstrom des Zerstäubungsgasstrahls zwischen 5 und 40 % des Werts des Massenstroms des Strahls flüssigen Brennstoffs beträgt.

5. Verfahren nach einem der vorhergehenden Ansprüche, **dadurch gekennzeichnet, dass** der Abstand I₂ zwischen dem Oxidationsmittel-Sekundärstrahl und dem Brennstoffstrahl zwischen 8 D₂ und 40 D₂ beträgt, wobei D₂ den Durchmesser des Kreises mit derselben Fläche wie die Fläche der Einspritzvorrichtung (42) darstellt, durch die das Sekundäroxidationsmittel eingespritzt wird.

6. Verfahren nach einem der vorhergehenden Ansprüche, **dadurch gekennzeichnet, dass** der Durchmesser des Kreises mit derselben Fläche wie die Fläche der Einspritzvorrichtung (42), durch die das Sekundäroxidationsmittel eingespritzt wird, D₂, zwischen 10 und 60 mm beträgt.

7. Verfahren nach einem der vorhergehenden Ansprüche, **dadurch gekennzeichnet, dass** der Durchmesser des Kreises mit derselben Fläche wie die Fläche der Einspritzvorrichtung (32), durch die der zweite Oxidationsmittel-Primärstrahl eingespritzt wird, D₁, zwischen 15 und 70 mm beträgt.

8. Verfahren nach einem der vorhergehenden Ansprüche, **dadurch gekennzeichnet, dass** die Gesamtmenge Sekundäroxidationsmittel zwischen 50 und 90 % der eingespritzten Gesamtmenge Oxidationsmittel beträgt.

9. Verfahren nach einem der vorhergehenden Ansprüche, **dadurch gekennzeichnet, dass** die Einspritzgeschwindigkeiten des zweiten Oxidationsmittel-Primärstrahls und des Oxidationsmittel-Sekundärstrahls kleiner oder gleich 200 m/s sind.

10. Verfahren nach einem der vorhergehenden Ansprüche, **dadurch gekennzeichnet, dass** es für die Verbrennung eines Glasgemenges verwendet wird und dass die Einspritzgeschwindigkeiten des zweiten Oxidationsmittel-Primärstrahls und des Oxidationsmittel-Sekundärstrahls kleiner oder gleich 100 m/s sind.

11. Verfahren nach einem der vorhergehenden Ansprüche, **dadurch gekennzeichnet, dass** der Massenstrom des ersten Oxidationsmittel-Primärhüllstrahls zwischen 10 und 20 % des Werts des Massenstroms des Oxidationsmittelgesamtstrahls beträgt, wobei der Oxidationsmittelgesamtstrahl der Summe der Oxidationsmittel-Primärstrahlen und des Oxidationsmittel-Sekundärstrahls entspricht.

## Claims

1. Method for combusting a liquid fuel and an oxidant, wherein at least one jet of the liquid fuel in atomised form and at least one oxidant jet are injected, the oxidant jet comprising a primary oxidant jet and a secondary oxidant jet, the primary oxidant jet being injected close to the liquid fuel jet so as to bring about a first incomplete combustion, the gases resulting from this first combustion still comprising at least a portion of the fuel, while the secondary oxidant jet is injected at a distance I₂ from the liquid fuel jet which is greater than the distance between the liquid fuel jet and the primary oxidant jet closest to the liquid fuel jet, so as to combust with the portion of the fuel present in the gases resulting from the first combustion, the primary oxidant jet comprising at least a first sheathing primary oxidant jet which is injected coaxially around the liquid fuel jet in atomised form, **characterised in that** the primary oxidant jet is divided into at least two primary jets,
at least a second primary oxidant jet being injected at a distance I₁ from the jet of the liquid fuel, the distance I₁ between the second primary oxidant jet and the liquid fuel jet being between 1.5 D_{G} and I₂/2, D_{G} representing the diameter of the circle having the same area as the area of the injector (221) through which the first sheathing primary oxidant jet is injected.

2. Method according to the preceding claim, **characterised in that** the jet of the liquid fuel in atomised form is obtained by coaxial injection of an atomisation gas jet around a jet of the liquid fuel.

3. Method according to the preceding claim, **characterised in that** atomisation gas is selected from an oxidising gas such as air or oxygen or an inert gas such as nitrogen or water vapour.

4. Method according to either claim 2 or claim 3, **characterised in that** the mass flow of the atomisation gas jet is between 5 and 40 % of the value of the mass flow of the liquid fuel jet.

5. Method according to any of the preceding claims, **characterised in that** the distance I₂ between the secondary oxidant jet and the fuel jet is between 8 D₂ and 40 D₂, D₂ representing the diameter of the circle having the same area as the area of the injector (42) through which the secondary oxidant is injected.

6. Method according to any of the preceding claims, **characterised in that** the diameter of the circle having the same area as the area of the injector (42) through which the secondary oxidant is injected, D₂, is between 10 and 60 mm.

7. Method according to any of the preceding claims, **characterised in that** the diameter of the circle having the same area as the area of the injector (32) through which the second primary oxidant jet is injected, D₁, is between 15 and 70 mm.

8. Method according to any of the preceding claims, **characterised in that** the total amount of secondary oxidant is between 50 and 90 % of the total amount of injected oxidant.

9. Method according to any of the preceding claims, **characterised in that** the injection speeds of the second primary oxidant jet and of the secondary oxidant jet are lower than or equal to 200 m/s.

10. Method according to any of the preceding claims, **characterised in that** it is implemented for the combustion of a glass charge and **in that** the injection speeds of the second primary oxidant jet and of the secondary oxidant jet are lower than or equal to 100 m/s.

11. Method according to any of the preceding claims, **characterised in that** the mass flow of the first sheathing primary oxidant jet is between 10 and 20 % of the value of the mass flow of the total oxidant jet, the total oxidant jet corresponding to the sum of the primary and secondary oxidant jets.
